(19) **Europäisches Patentamt / European Patent Office / Office européen des brevets**

(11) **EP 4 715 995 A1**

(12) **EUROPEAN PATENT APPLICATION**
published in accordance with Art. 153(4) EPC

(43) Date of publication:
**25.03.2026 Bulletin 2026/13**

(21) Application number: **24839983.4**

(22) Date of filing: **03.07.2024**

(51) International Patent Classification (IPC):
*H01M 50/446* (2021.01)     *H01M 50/449* (2021.01)
*H01M 50/431* (2021.01)     *H01M 10/052* (2010.01)

(52) Cooperative Patent Classification (CPC):
Y02E 60/10

(86) International application number:
**PCT/KR2024/009386**

(87) International publication number:
**WO 2025/014170 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.07.2023 KR 20230088117**

(71) Applicant: **LG Energy Solution, Ltd.**
**Seoul 07335 (KR)**

(72) Inventors:
• **LEE, Yong Hee**
**Daejeon 34122 (KR)**

• **SUNG, Dong Wook**
**Daejeon 34122 (KR)**
• **KA, Kyung Ryun**
**Daejeon 34122 (KR)**
• **KWON, Su Jee**
**Daejeon 34122 (KR)**
• **KIM, Min Ji**
**Daejeon 34122 (KR)**
• **HWANG, Seon Woo**
**Daejeon 34122 (KR)**

(74) Representative: **Hoffmann Eitle**
**Patent- und Rechtsanwälte PartmbB**
**Arabellastraße 30**
**81925 München (DE)**

(54) **SEPARATOR FOR ELECTROCHEMICAL DEVICE AND ELECTROCHEMICAL DEVICE COMPRISING SAME**

(57)     The present disclosure relates to a separator for an electrochemical device and an electrochemical device including the same, and more particularly, to a separator for an electrochemical device including a plate-shaped silicate-based composition in a coating layer, thereby capable of improving dispersibility of a slurry for the coating layer and improving uniformity of the coating layer, and an electrochemical device including the same.

【FIG. 1】

EP 4 715 995 A1

## Description

## Technical Field

The present disclosure claims priority to and the benefits of Korean Patent Application No. 10-2023-0088117, filed with the Korean Intellectual Property Office on July 7, 2023, the entire contents of which are incorporated herein by reference.

The present disclosure relates to a separator for an electrochemical device, and an electrochemical device including the same. In particular, the present disclosure relates to a separator for an electrochemical device including a plate-shaped silicate-based composition in a coating layer, thereby capable of improving dispersibility of a slurry for the coating layer and improving uniformity of the coating layer, and an electrochemical device including the same.

## Background Art

Among components of an electrochemical device, a separator includes a polymer substrate having a porous structure located between a positive electrode and a negative electrode and separates the positive electrode and the negative electrode, and performs roles of preventing an electrical short-circuit between the two electrodes and allowing an electrolyte and ions to pass through. The separator itself does not participate in an electrochemical reaction, however, physical properties such as wettability for an electrolyte liquid, the degree of porosity and thermal shrinkage affect performance and safety of an electrochemical device.

Accordingly, in order to strengthen physical properties of a separator, a coating layer is added to a porous polymer substrate, and various methods to change properties of the coating layer have been attempted by adding various materials to the coating layer. For example, inorganic substances may be added to the coating layer to improve mechanical strength of the separator, or inorganic substances or hydrates may be added to the coating layer to improve flame retardancy and heat resistance of the polymer substrate.

A separator may be attached to an electrode through a lamination process, and in order to secure adhesive strength between the electrode and the separator, a binder resin may be added to a slurry for a coating layer of the separator.

Meanwhile, a slurry for a coating layer prepared while manufacturing a separator has low viscosity, thereby having a problem in that inorganic substances precipitate when the slurry is left unattended or stored at room temperature, and there has been a problem in that additional stirring needs to be performed in order to uniformly disperse the precipitated inorganic substances again in the slurry for a coating layer.

Accordingly, there have been demands for studies on a separator capable of increasing viscosity of a slurry for a coating layer centering on a low shear condition rather than increasing viscosity of a slurry for a coating layer in both a low shear condition and a high shear condition, and improving phase stability when storing the slurry at room temperature.

## DISCLOSURE

## Technical Problem

The present disclosure is directed to providing a separator for an electrochemical device including a plate-shaped silicate-based composition in a coating layer included in the separator, and capable of improving uniformity of the separator by controlling components and content of the composition, and an electrochemical device including the same.

However, problems to be solved by the present disclosure are not limited to the above-mentioned problem, and other problems not mentioned will be clearly understood by those skilled in the art from the following description.

## Technical Solution

One embodiment of the present disclosure provides a separator for an electrochemical device, the separator including: a porous polymer substrate; and a coating layer provided on at least one surface of the porous polymer substrate and including a plate-shaped silicate-based composition, polymer binder particles and inorganic particles, wherein the plate-shaped silicate-based composition includes one selected from the group consisting of $SiO_2$, $MgO$, $Li_2O$, $Na_2O$ and combinations thereof.

According to one embodiment of the present disclosure, the plate-shaped silicate-based composition may include the $SiO_2$ in an amount of 50% by weight or greater and 60% by weight or less.

According to one embodiment of the present disclosure, the plate-shaped silicate-based composition may include the $MgO$ in an amount of 22% by weight or greater and 28% by weight or less.

According to one embodiment of the present disclosure, the plate-shaped silicate-based composition may

include the $Li_2O$ in an amount of 0.5% by weight or greater and 2.0% by weight or less.

According to one embodiment of the present disclosure, the plate-shaped silicate-based composition may include the $Na_2O$ in an amount of 2.0% by weight or greater and 8.0% by weight or less.

According to one embodiment of the present disclosure, the $SiO_2$ may be included in an amount of 65% by weight or greater and 80% by weight or less, the $MgO$ may be included in an amount of 10% by weight or greater and 20% by weight or less, the $Li_2O$ may be included in an amount of 0.5% by weight or greater and 2.0% by weight or less, and the $Na_2O$ may be included in an amount of 9% by weight or greater and 20% by weight or less in the plate-shaped silicate-based composition.

According to one embodiment of the present disclosure, the $SiO_2$ may be included in an amount of 70% by weight or greater and 75% by weight or less, the $MgO$ may be included in an amount of 13% by weight or greater and 18% by weight or less, the $Li_2O$ may be included in an amount of 1.0% by weight or greater and 1.5% by weight or less, and the $Na_2O$ may be included in an amount of 12.0% by weight or greater and 18.0% by weight or less in the plate-shaped silicate-based composition.

According to one embodiment of the present disclosure, the $SiO_2$ may be included in an amount of 71% by weight or greater and 74% by weight or less, the $MgO$ may be included in an amount of 13% by weight or greater and 16% by weight or less, the $Li_2O$ may be included in an amount of 1.1% by weight or greater and 1.4% by weight or less, and the $Na_2O$ may be included in an amount of 14.0% by weight or greater and 16.0% by weight or less in the plate-shaped silicate-based composition.

According to one embodiment of the present disclosure, a content of the plate-shaped silicate-based composition may be 0.1 parts by weight or greater and 1.0 parts by weight or less with respect to 100 parts by weight of the coating layer.

According to one embodiment of the present disclosure, the plate-shaped silicate-based composition may have a specific surface area of 250 m2/g or greater and 400 m2/g or less.

According to one embodiment of the present disclosure, the plate-shaped silicate-based composition may have density of 900 kg/m3 to 1050 kg/m3.

According to one embodiment of the present disclosure, an aqueous suspension including the plate-shaped silicate-based composition in an amount of 2% by weight may have a pH of 8.0 or greater and 12.0 or less.

According to one embodiment of the present disclosure, the plate-shaped silicate-based composition may further include $P_2O_5$, F and combinations thereof.

According to one embodiment of the present disclosure, the plate-shaped silicate-based composition may be laponite.

One embodiment of the present disclosure provides an electrochemical device including: a positive electrode; a negative electrode; and the separator interposed between the positive electrode and the negative electrode.

**Advantageous Effects**

A separator for an electrochemical device according to one embodiment of the present disclosure is capable of improving uniformity of the separator by preventing components included in a coating layer from being non-uniformly distributed.

An electrochemical device according to one embodiment of the present disclosure is capable of improving performance of a battery by improving uniformity of the coating layer.

**Brief Description of Drawings**

FIGS. 1a and 1b are schematic diagrams of a separator for an electrochemical device according to one embodiment of the present disclosure. Specifically, FIG. 1a is a schematic diagram of a separator for an electrochemical device provided with a coating layer on one surface, and FIG. 1b is a schematic diagram of a separator for an electrochemical device provided with a coating layer on both surfaces.

FIG. 2 is a schematic diagram of an electrochemical device according to one embodiment of the present disclosure.

**Best Mode**

In the present specification, a description of a certain part "including" certain components means that it may further include other components, and does not exclude other components unless particularly stated on the contrary.

In the present specification, "A and/or B" means "A and B, or A or B".

In the present specification, a description of being provided "on" one component means that another component may be further placed, and does not exclude another component being placed in between unless particularly stated on the contrary.

In the present specification, a property of "having pores" means that an object includes a plurality of pores, and by the structure of the pores being interconnected with each other, gaseous and/or liquid fluids may pass from one side to the other side of the object.

In the present specification, a separator has porous properties including a plurality of pores, and performs a role of a porous ion-conducting barrier allowing ions to pass through while blocking an electrical contact between a negative electrode and a positive electrode in an electrochemical device.

Hereinafter, the present disclosure will be described in more detail.

One embodiment of the present disclosure provides a separator for an electrochemical device 100, the separator including: a porous polymer substrate 110; and a coating layer 130 including a plate-shaped silicate-based composition, polymer binder particles and inorganic particles provided on at least one surface of the porous polymer substrate 110, wherein the plate-shaped silicate-based composition includes one selected from the group consisting of $SiO_2$, MgO, $Li_2O$, $Na_2O$ and combinations thereof.

The separator for an electrochemical device 100 according to one embodiment of the present disclosure may improve uniformity of the separator by preventing the components included in the coating layer 130 from being non-uniformly distributed.

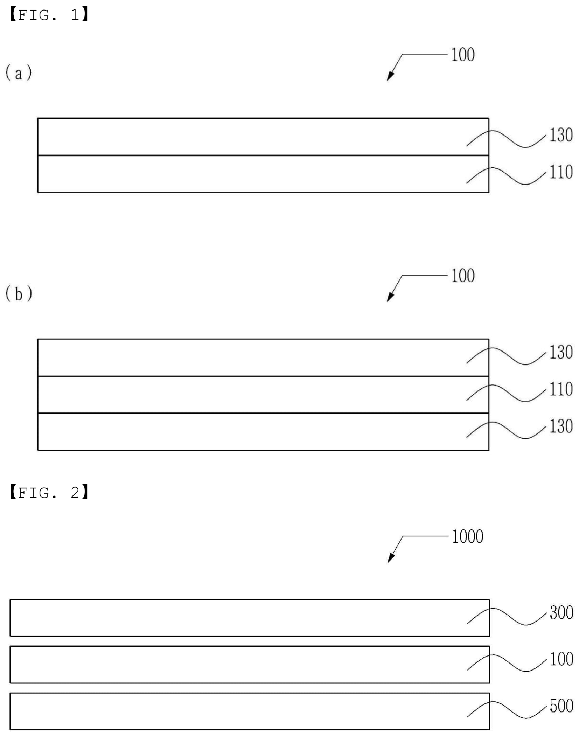

FIGS. 1a and 1b are schematic diagrams of the separator for an electrochemical device 100 according to one embodiment of the present disclosure. Specifically, FIG. 1a is a schematic diagram of the separator for an electrochemical device 100 provided with a coating layer on one surface, and FIG. 1b is a schematic diagram of the separator for an electrochemical device 100 provided with a coating layer on both surfaces. The separator for an electrochemical device 100, which is one embodiment of the present disclosure, will be specifically described with reference to FIG. 1.

According to one embodiment of the present disclosure, the separator for an electrochemical device 100 includes a porous polymer substrate 110. As described above, the separator for an electrochemical device 100 allows lithium ions to pass through while blocking an electrical contact by including the porous polymer substrate 110, and a shutdown function may be achieved at a proper temperature.

According to one embodiment of the present disclosure, the porous polymer substrate 110 may be prepared using a polyolefin-based resin as a base resin. Examples of the polyolefin-based resin may include polyethylene, polypropylene, polypentene and the like, and the polyolefin-based resin may include one or more types thereof. A porous separator, that is, a separator having a plurality of pores, prepared using such a polyolefin-based resin as a base resin may provide a shutdown function at a proper temperature.

According to one embodiment of the present disclosure, the polyolefin-based resin may have a weight average molecular weight of 500,000 or greater and 1,500,000 or less. By adjusting the weight average molecular weight of the polyolefin-based resin in the above-described range, compression resistance of the separator may be improved. Furthermore, when different types of polyolefin-based resins are used after mixing or a separator having a multilayer structure formed with different types of polyolefin-based resins is formed, the weight average molecular weight of the polyolefin-based resin may be calculated by adding the weight average molecular weight of each of the polyolefin-based resins depending on the content ratio.

In the present specification, the weight average molecular weight (Mw) may be measured by gel permeation chromatography (GPC, PL GPC220, Agilent Technologies), and a condition for the measurement may be set as follows.

- Column: PL Olexis (Polymer Laboratories)
- Solvent: TCB (trichlorobenzene)
- Flow rate: 1.0 ml/min
- Sample concentration: 1.0 mg/ml
- Injection volume: 200 μl
- Column temperature: 160°C
- Detector: Agilent High Temperature RI detector
- Standard: Polystyrene (corrected by third order function)

In the present specification, a glass transition temperature may be measured using differential scanning calorimetry (DSC). Specifically, a glass transition temperature may be measured at a temperature-raising rate of 10°C (-50°C to 250°C) using differential scanning calorimetry. For example, a glass transition temperature may be measured using DSC 250 (TA Instruments).

According to one embodiment of the present disclosure, the porous polymer substrate 110 may be prepared using a method (wet method) in which a polyolefin-based resin is mixed with a plasticizer (diluent) at a high temperature to form a single phase, the polymer material and the plasticizer are phase-separated during a cooling process, and then the plasticizer is extracted to form pores, and elongation and heat setting treatments are performed. In addition, the porous polymer substrate using a polyolefin-based resin may be provided with a core portion formed with a mixture of polyethylene and polypropylene, and a polyethylene skin portion laminated on both surfaces of the core portion.

According to one embodiment of the present disclosure, the average pore size and the maximum pore size of the porous polymer substrate 110 may be readily prepared to accord with the scope of the present disclosure by those skilled in the art through adjusting the mixing ratio of the plasticizer, the magnification of elongation, the heat setting treatment temperature and the like.

According to one embodiment of the present disclosure, the porous polymer substrate 110 may have a thickness of 1 $\mu$m or greater and 50 $\mu$m or less. Specifically, the porous polymer substrate may have a thickness of 2 $\mu$m or greater and 45 $\mu$m or less, 3 $\mu$m or greater and 40 $\mu$m or less, 4 $\mu$m or greater and 35 $\mu$m or less, 5 $\mu$m or greater and 30 $\mu$m or less, 6 $\mu$m or greater and 25 $\mu$m or less, 7 $\mu$m or greater and 20 $\mu$m or less, or 8 $\mu$m or greater and 15 $\mu$m or less. By adjusting the thickness of the porous polymer substrate in the above-described range, energy density of a battery may be improved.

According to one embodiment of the present disclosure, the porous polymer substrate 110 may have porosity of 10% by volume or greater and 90% by volume or less. Specifically, the porous polymer substrate may have porosity of 10% by volume or greater and 90% by volume or less, 20% by volume or greater and 80% by volume or less, 30% by volume or greater and 70% by volume or less, or 40% by volume or greater and 60% by volume or less. By adjusting the porosity of the porous polymer substrate in the above-described range, separator permeability of lithium ions may be controlled.

According to one embodiment of the present disclosure, the coating layer 130 is provided on at least one surface of the porous polymer substrate 110. Specifically, as illustrated in FIG. 1a, the separator for an electrochemical device 100 may include the coating layer 130 provided on one surface of the porous polymer substrate 110. In addition, as illustrated in FIG. 1b, the separator for an electrochemical device 100 may include the coating layer 130 provided on both surfaces of the porous polymer substrate 110. By the separator for an electrochemical device 100 including the coating layer 130 provided on at least one surface of the porous polymer substrate 110 as described above, heat resistance of the separator is improved, mechanical properties are improved, and an occurrence of electrical short-circuit of an electrode caused by shrinkage of the separator at a high temperature may be prevented.

According to one embodiment of the present disclosure, the content of the inorganic particles in the coating layer 130 may be 60 parts by weight or greater and 99 parts by weight or less with respect to 100 parts by weight of the coating layer 130. Specifically, the content of the inorganic particles in the coating layer 130 may be 61 parts by weight or greater and 98 parts by weight or less, 62 parts by weight or greater and 97 parts by weight or less, 63 parts by weight or greater and 96 parts by weight or less, 64 parts by weight or greater and 95 parts by weight or less, 65 parts by weight or greater and 94 parts by weight or less, 66 parts by weight or greater and 93 parts by weight or less, 67 parts by weight or greater and 92 parts by weight or less, 68 parts by weight or greater and 91 parts by weight or less, 69 parts by weight or greater and 90 parts by weight or less, 70 parts by weight or greater and 89 parts by weight or less, 71 parts by weight or greater and 88 parts by weight or less, 72 parts by weight or greater and 87 parts by weight or less, 73 parts by weight or greater and 86 parts by weight or less, 74 parts by weight or greater and 85 parts by weight or less, 75 parts by weight or greater and 84 parts by weight or less, 76 parts by weight or greater and 83 parts by weight or less, 77 parts by weight or greater and 82 parts by weight or less, 78 parts by weight or greater and 81 parts by weight or less, or 79 parts by weight or greater and 80 parts by weight or less with respect to 100 parts by weight of the coating layer 130. By adjusting the content of the inorganic particles included in the coating layer 130 in the above-described range, the polymer binder and the inorganic particles are phase-separated in the coating layer, and accordingly, adhesive strength with an electrode may be improved by including the inorganic particles and/or the polymer binder to have a different content in one portion and another portion in the coating layer, or by providing the polymer binder on another portion that is the surface of the coating layer in excess compared to one portion. Furthermore, battery safety may be secured by improving heat resistance of the separator.

According to one embodiment of the present disclosure, the coating layer 130 includes a plate-shaped silicate-based composition, polymer binder particles and inorganic particles. By the coating layer including a plate-shaped silicate-based composition, polymer binder particles and inorganic particles as described above, dispersibility of the polymer binder particles and the inorganic particles is improved, and a coating layer having a uniform surface may be formed.

According to one embodiment of the present disclosure, the plate-shaped silicate-based composition includes one selected from the group consisting of $SiO_2$, MgO $Li_2O$ $Na_2O$ and combinations thereof. In the present specification, the plate-shaped silicate-based composition may mean that the silicate forms a plate-shaped structure. By the plate-shaped silicate-based composition including one selected from the group consisting of $SiO_2$, MgO $Li_2O$ $Na_2O$ and combinations thereof as described above, uniformity of the coating layer is improved, and a uniform surface of the separator may be achieved, improving a breakdown voltage.

According to one embodiment of the present disclosure, the plate-shaped silicate-based composition may include the $SiO_2$ in an amount of 50% by weight or greater and 60% by weight or less. Specifically, the content of the $SiO_2$ in the plate-shaped silicate-based composition may be 51% by weight or greater and 59% by weight or less, 52% by weight or greater and 58% by weight or less, 53% by weight or greater and 57% by weight or less, or 54% by weight or greater and 56% by weight or less. By adjusting the content of the $SiO_2$ in the above-described range, dispersibility of the slurry for a coating layer is improved, and phase separation may be prevented.

According to one embodiment of the present disclosure, the plate-shaped silicate-based composition may include the MgO in an amount of 22% by weight or greater and 28% by weight or less. Specifically, the content of the MgO in the plate-shaped silicate-based composition may be 23% by weight or greater and 27% by weight or less, or 24% by weight or greater and 26% by weight or less. By adjusting the content of the MgO in the above-described range, dispersibility of the slurry for a coating layer is improved, and phase separation may be prevented.

According to one embodiment of the present disclosure, the plate-shaped silicate-based composition may include the $Li_2O$ in an amount of 0.5% by weight or greater and 2.0% by weight or less. Specifically, the content of the $Li_2O$ in the plate-shaped silicate-based composition may be 0.6% by weight or greater and 1.9% by weight or less, 0.7% by weight or greater and 1.8% by weight or less, 0.8% by weight or greater and 1.7% by weight or less, 0.9% by weight or greater and 1.6% by weight or less, 1.0% by weight or greater and 1.5% by weight or less, 1.1% by weight or greater and 1.4% by weight or less, or 1.2% by weight or greater and 1.3% by weight or less. By adjusting the content of the $Li_2O$ in the above-described range, dispersibility of the slurry for a coating layer is improved, and phase separation may be prevented.

According to one embodiment of the present disclosure, the plate-shaped silicate-based composition may include the $Na_2O$ in an amount of 2.0% by weight or greater and 8.0% by weight or less. Specifically, the content of the $Na_2O$ in the plate-shaped silicate-based composition may be 3.0% by weight or greater and 7.0% by weight or less, or 4.0% by weight or greater and 6.0% by weight or less. By adjusting the content of the $Na_2O$ in the above-described range, dispersibility of the slurry for a coating layer is improved, and phase separation may be prevented.

According to one embodiment of the present disclosure, the $SiO_2$ may be included in an amount of 65% by weight or greater and 80% by weight or less, the MgO may be included in an amount of 10% by weight or greater and 20% by weight or less, the $Li_2O$ may be included in an amount of 0.5% by weight or greater and 2.0% by weight or less, and the $Na_2O$ may be included in an amount of 9% by weight or greater and 20% by weight or less in the plate-shaped silicate-based composition. Specifically, the $SiO_2$ may be included in an amount of 70% by weight or greater and 75% by weight or less, the MgO may be included in an amount of 13% by weight or greater and 18% by weight or less, the $Li_2O$ may be included in an amount of 1.0% by weight or greater and 1.5% by weight or less, and the $Na_2O$ may be included in an amount of 12.0% by weight or greater and 18.0% by weight or less in the plate-shaped silicate-based composition. More specifically, according to one embodiment of the present disclosure, the $SiO_2$ may be included in an amount of 71% by weight or greater and 74% by weight or less, the MgO may be included in an amount of 13% by weight or greater and 16% by weight or less, the $Li_2O$ may be included in an amount of 1.1% by weight or greater and 1.4% by weight or less, and the $Na_2O$ may be included in an amount of 14.0% by weight or greater and 16.0% by weight or less in the plate-shaped silicate-based composition. By adjusting the content of each of the $SiO_2$, the MgO, the $Li_2O$ and the $Na_2O$ in the above-described range in the plate-shaped silicate-based composition, dispersibility of the slurry for a coating layer is improved, and phase separation may be prevented.

According to one embodiment of the present disclosure, the content of the plate-shaped silicate-based composition may be 0.1 parts by weight or greater and 1.0 parts by weight or less with respect to 100 parts by weight of the coating layer. Specifically, the content of the plate-shaped silicate-based composition may be 0.2 parts by weight or greater and 0.9 parts by weight or less, 0.3 parts by weight or greater and 0.8 parts by weight or less, 0.4 parts by weight or greater and 0.7 parts by weight or less, or 0.5 parts by weight or greater and 0.6 parts by weight or less with respect to 100 parts by weight of the coating layer. By adjusting the content of the plate-shaped silicate-based composition in the above-described range, dispersibility of the slurry for a coating layer is improved, and phase separation may be prevented.

According to one embodiment of the present disclosure, the plate-shaped silicate-based composition may have a specific surface area of 250 $m^2/g$ or greater and 400 $m^2/g$ or less. Specifically, the plate-shaped silicate-based composition may have a specific surface area of 260 $m^2/g$ or greater and 390 $m^2/g$ or less, 270 $m^2/g$ or greater and 380 $m^2/g$ or less, 280 $m^2/g$ or greater and 370 $m^2/g$ or less, 290 $m^2/g$ or greater and 360 $m^2/g$ or less, 300 $m^2/g$ or greater and 350 $m^2/g$ or less, 310 $m^2/g$ or greater and 340 $m^2/g$ or less, or 320 $m^2/g$ or greater and 330 $m^2/g$ or less. By adjusting the specific surface area of the plate-shaped silicate-based composition in the above-described range, dispersibility of the plate-shaped silicate-based composition itself may be improved, increasing uniformity of the coating layer.

In the present specification, the "specific surface area" may be a BET specific surface area calculated from, when an adsorption isotherm is measured up to 1 bar under a -196°C condition using a BET-specific surface area analyzer (BEL, Microtrac), the measured $N_2$ adsorption isotherm using a Brunauer-Ennett-Teller (BET) model.

According to one embodiment of the present disclosure, the plate-shaped silicate-based composition may have density of 900 $kg/m^3$ to 1050 $kg/m^3$. The plate-shaped silicate-based composition may have density of 910 $kg/m^3$ to 1040 $kg/m^3$, 920 $kg/m^3$ to 1030 $kg/m^3$, 930 $kg/m^3$ to 1020 $kg/m^3$, 940 $kg/m^3$ to 1010 $kg/m^3$, 950 $kg/m^3$ to 1000 $kg/m^3$, 960 $kg/m^3$ to 990 $kg/m^3$ or 970 $kg/m^3$ to 980 $kg/m^3$. By adjusting the density of the plate-shaped silicate-based composition in the above-described range, weight lightening of the coating layer may be achieved, and energy density of the battery including the separator may be improved.

According to one embodiment of the present disclosure, an aqueous suspension including the plate-shaped silicate-based composition in an amount of 1% by weight or greater and 3% by weight or less may have a pH of 8.0 or greater and 12.0 or less. Specifically, an aqueous suspension including the plate-shaped silicate-based composition in an amount of 2% by weight may have a pH of 8.0 or greater and 12.0 or less. The aqueous suspension in the present specification may mean a material obtained by dispersing particles using water as a dispersion medium. The aqueous suspension including the plate-shaped silicate-based composition in an amount of 2% by weight may mean a material obtained by mixing and dispersing 2% by weight of the plate-shaped silicate-based composition that is a particle and 98% by weight of water that is a dispersion medium. Specifically, the aqueous suspension including the plate-shaped silicate-based composition in an amount of 2% by weight may have a pH of 8.5 or greater and 10.5 or less, or 9.0 or greater and 10.0 or less. By adjusting the pH of the aqueous suspension including the plate-shaped silicate-based composition in an amount of 2% by weight in the above-described range, denaturation of the polymer binder particles included in the slurry for a coating layer may be prevented.

According to one embodiment of the present disclosure, the plate-shaped silicate-based composition may further include $P_2O_5$, F and combinations thereof. By the plate-shaped silicate-based composition further including $P_2O_5$, F and combinations thereof as described above, uniformity of the coating layer is improved, and a uniform surface of the separator may be achieved, improving a breakdown voltage.

According to one embodiment of the present disclosure, the plate-shaped silicate-based composition may be laponite. By selecting laponite as the plate-shaped silicate-based composition as described above, uniformity of the coating layer is improved, and a uniform surface of the separator may be achieved, improving a breakdown voltage.

According to one embodiment of the present disclosure, the coating layer 130 may include a plurality of pores. Specifically, the coating layer may be a porous coating layer. More specifically, the coating layer may be a porous coating layer including a plurality of pores therein. By the coating layer including a plurality of pores as described above, the separator may allow lithium ions to pass through and a current to flow while physically blocking a negative electrode and a positive electrode.

According to one embodiment of the present disclosure, the coating layer 130 may be formed by inorganic particles being bound by polymer binder particles, and the inorganic particles being integrated in the coating layer. The pores inside the coating layer 130 may result from an interstitial volume, an empty space between the inorganic particles.

According to one embodiment of the present disclosure, the coating layer 130 may be formed to a thickness of 1 $\mu$m to 20 $\mu$m with respect to any one side of the porous polymer substrate 110. By adjusting the thickness of the coating layer 130 in the above-described range, heat resistance or electrical resistance of the separator may be controlled in a proper range.

In one embodiment of the present disclosure, the thicknesses of the porous polymer substrate 110, the coating layer 130 and/or the like may be measured using a contact-type thickness measurement device. As an example of the contact-type thickness measurement device, VL-50S-B manufactured by Mitutoyo Corporation may be used.

According to one embodiment of the present disclosure, the polymer binder particle 133 may be an acryl-based binder, a polyvinylidene-based binder, or a combination thereof. The combination of the acryl-based binder and the polyvinylidene-based binder may be a mixture of the acryl-based binder and the polyvinylidene-based binder, a copolymer including the acryl-based repeating unit and the polyvinylidene-based repeating unit, or a hybridized product of the acryl-based binder and the polyvinylidene-based binder. In addition, the polyvinylidene-based binder may be a copolymer of polyvinylidene fluoride (PVdF) and hexafluoropropylene (HFP). By selecting the polymer binder particle from those described above, porosity of the separator may be maintained, a battery may be readily manufactured by improving adhesive strength between the electrode and the separator in a lamination process of the battery, and a stacking process may be stably performed. Furthermore, porosity of the separator may be maintained, and adhesive strength may be maintained even when the coating layer is wet by an electrolyte liquid after activating the battery. Furthermore, stiffness of the battery is improved, and bending of the separator may be prevented.

According to one embodiment of the present disclosure, the acryl-based binder is a polymer including a carboxylic acid ester as a repeating unit, and may preferably be a (meth)acrylic acid ester or an acryl-styrene copolymer.

According to one embodiment of the present disclosure, specific examples of the (meth)acrylic acid ester may include methyl (meth)acrylate, ethyl (meth)acrylate, n-propyl (meth)acrylate, i-propyl (meth)acrylate, n-butyl (meth) acrylate, i-butyl (meth)acrylate, n-amyl (meth)acrylate, i-amyl (meth)acrylate, hexyl (meth)acrylate, cyclohexyl (meth) acrylate, 2-ethylhexyl (meth)acrylate, n-octyl (meth)acrylate, nonyl (meth)acrylate, decyl (meth)acrylate, hydroxymethyl (meth)acrylate, hydroxyethyl (meth)acrylate, ethylene glycol (meth)acrylate, ethylene glycol di(meth)acrylate, propylene glycol di(meth)acrylate, trimethylolpropane tri(meth)acrylate, pentaerythritol tetra (meth) acrylate, dipentaerythritol hexa(meth)acrylate, allyl (meth)acrylate, ethylene di(meth)acrylate and the like, and may be one or more types selected from among these. Among these, one or more types selected from methyl (meth)acrylate, ethyl (meth)acrylate and 2-ethylhexyl (meth)acrylate are preferred, and methyl (meth)acrylate is particularly preferred.

According to one embodiment of the present disclosure, the acryl-styrene copolymer may include an acryl-based binder, and the acryl-based binder may be polyacrylate-based. For example, the acryl-based binder may be one or more types selected from the group consisting of styrene-butyl acrylate, styrene-butadiene rubber, nitrile-butadiene rubber, acrylonitrile-butadiene rubber, acrylonitrile-butadienestyrene rubber and acrylate-based polymers, and specifically, may be a copolymer including an acrylate.

According to one embodiment of the present disclosure, the polymer binder particle 133 may have a glass transition temperature (Tg) of 20°C or higher and 60°C or lower. Specifically, the polymer binder particles may have a glass transition temperature (Tg) of 22°C or higher and 58°C or lower, 24°C or higher and 56°C or lower, 26°C or higher and 54°C or lower, 28°C or higher and 52°C or lower, 30°C or higher and 50°C or lower, 32°C or higher and 48°C or lower, 34°C or higher and 46°C or lower, 36°C or higher and 44°C or lower, or 38°C or higher and 42°C or lower. By adjusting the glass transition temperature (Tg) of the polymer binder particle in the above-described range, viscosity of the slurry for preparing the coating layer may be controlled, and convenience of battery manufacturing may be improved.

In the present specification, the glass transition temperature may be measured using differential scanning calorimetry (DSC). Specifically, the glass transition temperature may be measured at a temperature-raising rate of 10°C (-50°C to 250°C) using differential scanning calorimetry. For example, the glass transition temperature may be measured using DSC 250 (TA Instruments).

According to one embodiment of the present disclosure, the average diameter ($D_{50}$) of the polymer binder particle 133 is not particularly limited, but is preferably in a range of 0.1 $\mu$m or greater and 1 $\mu$m or less for forming a coating layer 130 with uniform thickness and for proper porosity. Specifically, the polymer binder particle 135 may have an average diameter ($D_{50}$) of 0.2 $\mu$m or greater and 0.9 $\mu$m or less, 0.3 $\mu$m or greater and 0.8 $\mu$m or less, 0.4 $\mu$m or greater and 0.7 $\mu$m or less, or 0.5 $\mu$m or greater and 0.6 $\mu$m or less. By adjusting the average diameter ($D_{50}$) of the polymer binder particle 133 in the above-described range, dispersibility of the slurry prepared for preparing the coating layer is improved, and the thickness of the formed coating layer may be reduced.

According to one embodiment of the present disclosure, the polymer binder particle 133 may have sphericity of 0.90 or greater and 0.99 or less. Specifically, the polymer binder particle 133 may have sphericity of 0.94 or greater and 0.96 or less. The sphericity in the present specification may be a ratio of the shortest distance with respect to the longest distance among two points where a straight line passing through the particle and the particle surface meet. By adjusting the sphericity of the polymer binder particle in the above-described range, dispersity of the polymer binder particles of the slurry in the coating layer is improved, uniform surface of the coating layer is achieved by adjusting the size of the polymer binder particle, and low roughness may be achieved, preventing a pressure from being concentrated only on a specific portion of the coating layer.

According to one embodiment of the present disclosure, the polymer binder particle 133 may have density of 1.0 $g/cm^3$ or greater and 2.0 $g/cm^3$ or less. Specifically, the polymer binder particle 133 may have density of 1.3 $g/cm^3$ or greater and 1.7 $g/cm^3$ or less. By adjusting the density of the polymer binder particle 133 in the above-described range, the layer separation effect of the polymer binder particles and the inorganic particles may be improved, and adhesive strength with an electrode may be improved by the polymer binder particles being placed on the surface of the coating layer in excess compared to the inorganic particles.

According to one embodiment of the present disclosure, the polyvinylidene-based binder may be a polyvinylidene-based binder having a hexafluoropropylene (HFP) content of 1% by weight or greater and 50% by weight or less. Specifically, the polyvinylidene-based binder may have a hexafluoropropylene (HFP) content of 1% by weight or greater and 50% by weight or less, 2% by weight or greater and 45% by weight or less, 3% by weight or greater and 40% by weight or less, 4% by weight or greater and 35% by weight or less, 5% by weight or greater and 30% by weight or less, 7% by weight or greater and 25% by weight or less, or 10% by weight or greater and 20% by weight or less. By selecting a polyvinylidene-based binder having a hexafluoropropylene content of 1% by weight or greater and 50% by weight or less as the polyvinylidene-based binder, porosity of the separator may be maintained, and adhesive strength may be maintained even when the coating layer is wet by an electrolyte liquid after activating the battery. In the present specification, a degree of substitution of the polyvinylidene-based binder may mean a weight ratio including hexafluoropropylene.

According to one embodiment of the present disclosure, the content of the polymer binder particles may be 1 part by weight or greater and 40 parts by weight or less with respect to 100 parts by weight of the coating layer 130. Specifically, the content of the polymer binder particles may be 2 parts by weight or greater and 39 parts by weight or less, 3 parts by weight or greater and 38 parts by weight or less, 4 parts by weight or greater and 37 parts by weight or less, 5 parts by weight or greater and 36 parts by weight or less, 6 parts by weight or greater and 35 parts by weight or less, 7 parts by weight or greater and 34 parts by weight or less, 8 parts by weight or greater and 33 parts by weight or less, 9 parts by weight or greater and 32 parts by weight or less, 10 parts by weight or greater and 31 parts by weight or less, 11 parts by weight or greater and 30 parts by weight or less, 12 parts by weight or greater and 29 parts by weight or less, 13 parts by weight or greater and 28 parts by weight or less, 14 parts by weight or greater and 27 parts by weight or less, 15 parts by weight or greater and 26 parts by weight or less, 16 parts by weight or greater and 25 parts by weight or less, 17 parts by weight or greater and 24 parts by weight or less, 18 parts by weight or greater and 23 parts by weight or less, 19 parts by weight or greater and 22 parts by weight or less, or 20 parts by weight or greater and 21 parts by weight or less, with respect to 100 parts by weight of the coating layer 130. By adjusting the content of the polymer binder particles in the above-described range, assembly readiness may be improved in the process of assembling electrodes.

According to one embodiment of the present disclosure, when combining the acryl-based binder and the polyvinylidene-based binder in the coating layer 130, the weight ratio may be 9:1 to 1:9. Specifically, when combining the acryl-based binder and the polyvinylidene-based binder in the coating layer 130, the weight ratio may be 8:1 to 1:8, 7:1 to 1:7, 6:1 to 1:6, 5:1 to 1:5, 4:1 to 1:4, 3:1 to 1:3 or 2:1 to 1:2. By adjusting the weight ratio between the acryl-based binder and the polyvinylidene-based binder in the above-described range, wet adhesive strength and dry adhesive strength of the separator for an electrochemical device may be improved at the same time.

According to one embodiment of the present disclosure, the inorganic particles that may be used in the coating layer 130 are not particularly limited as long as they are electrochemically stable. In other words, the inorganic particles that may be used in one embodiment of the present disclosure are not particularly limited as long as they do not undergo oxidation and/or reduction reactions in the operating voltage range (for example, 0 V to 5 V based on Li/Li$^+$) of an applied electrochemical device.

According to one embodiment of the present disclosure, nonlimiting examples of the inorganic particles may include $BaTiO_3$, $Pb(Zr,Ti)O_3$ (PZT), $Pb_{1-x}La_xZr_{1-y}Ti_yO_3$ (PLZT, 0<x<1, 0<y<1), $Pb(Mg_{1/3}Nb_{2/3})O_3$-$PbTiO_3$ (PMN-PT), hafnia ($HfO_2$), $SrTiO_3$, $SnO_2$, $CeO_2$, MgO, $Mg(OH)_2$, NiO, CaO, ZnO, $ZrO_2$, $SiO_2$, $Y_2O_3$, $Al_2O_3$, SiC, $Al(OH)_3$, $TiO_2$, aluminum peroxide, zinc tin hydroxide ($ZnSn(OH)_6$), tin-zinc oxide ($Zn_2SnO_4$, $ZnSnO_3$), antimony trioxide ($Sb_2O_3$), antimony tetroxide ($Sb_2O_4$), antimony pentoxide ($Sb_2O_3$) and the like, and the inorganic particles may include one, or two or more thereof.

According to one embodiment of the present disclosure, an average diameter ($D_{50}$) of the inorganic particles is not particularly limited, but is preferably in a range of 0.3 $\mu$m or greater and 1 $\mu$m or less for forming a coating layer 130 with a uniform thickness and proper porosity. Specifically, the inorganic particles may have an average diameter ($D_{50}$) of 0.2 $\mu$m or greater and 0.9 $\mu$m or less, 0.3 $\mu$m or greater and 0.8 $\mu$m or less, 0.4 $\mu$m or greater and 0.7 $\mu$m or less, or 0.5 $\mu$m or greater and 0.6 $\mu$m or less. Specifically, when the average diameter is less than 0.3 $\mu$m, dispersibility of the inorganic particles in the slurry prepared for preparing the coating layer may be reduced, and when the average diameter is greater than 1 $\mu$m, the thickness of the formed coating layer may increase.

In the present specification, the "$D_{50}$ particle diameter" means a particle diameter at a 50% point in cumulative distribution of the number of particles depending on the particle diameter. The particle diameter may be measured using a laser diffraction method. Specifically, a powder to be measured is dispersed in a dispersion medium and then introduced to a commercially available laser diffraction particle size measurement device (for example, Microtrac S3500), and a difference in the diffraction pattern depending on the particle size is measured when the particles pass through the laser beam to calculate particle size distribution. The $D_{50}$ particle diameter may be measured by calculating a particle diameter at a 50% point in cumulative distribution of the number of particles depending on the particle diameter in the measurement device.

According to one embodiment of the present disclosure, the coating layer 130 may have porosity of 30% by volume or greater. Specifically, the coating layer 130 may have porosity of 30% by volume or greater and 70% by volume or less, 32% by volume or greater and 68% by volume or less, 34% by volume or greater and 66% by volume or less, 36% by volume or greater and 64% by volume or less, 38% by volume or greater and 62% by volume or less, 40% by volume or greater and 60% by volume or less, 42% by volume or greater and 58% by volume or less, 44% by volume or greater and 56% by volume or less, 46% by volume or greater and 54% by volume or less, or 48% by volume or greater and 52% by volume or less. By adjusting the porosity of the coating layer 130 in the above-described range, migration of ions is maintained in the separator, and an increase in the resistance of the separator may be prevented. Specifically, when the porosity is 70% by volume or less, dynamic properties capable of withstanding a press process of adhering with an electrode may be secured, and it is also suitable to secure adhesive strength since the surface opening ratio does not increase too much. Meanwhile, the porosity being 30% by volume or greater is advantageous in terms of ion permeability.

In the present specification, the "porosity" means a ratio of the volume occupied by pores with respect to the total volume. % by volume is used as a unit thereof, and the porosity may be used interchangeably with terms such as proportion of void.

In the present specification, the porosity may correspond to a value obtained by subtracting a volume converted into weight and density of each component of the porous polymer substrate 110 and/or the coating layer 130 from a volume calculated from thickness, width and length of the porous polymer substrate 110 and/or the coating layer 130.

In one embodiment of the present disclosure, the porosity and the pore size of the porous polymer substrate 110 and/or the coating layer 130 may be measured using a BET 6-dot method by employing a nitrogen gas adsorption flow method using a scanning electron microscope (SEM) image, a mercury porosimeter, a capillary flow porometer or a porosimetry analyzer (Bell Japan Inc, Belsorp-II mini). Herein, using a capillary flow porometer may be advantageous.

One embodiment of the present disclosure provides a method for manufacturing a separator for an electrochemical device, the method including: mixing a slurry for a coating layer 130 including a plate-shaped silicate-based composition, polymer binder particles and inorganic particles (S10); coating the slurry for a coating layer on at least one surface of a porous polymer substrate 110 (S30); and providing a coating layer 130 by drying the slurry for a coating layer (S50).

The method for manufacturing a separator for an electrochemical device according to one embodiment of the present disclosure may maintain adhesive strength in a lamination process with an electrode, and may improve stiffness or prevent bending of a pouch-type cell by maintaining adhesive strength after activating a battery. Furthermore, insulation and thermal conduction properties of the separator may be improved, and uniformity of the coating layer may be improved. In addition, dispersibility of the particles dispersed in the slurry for a coating layer is improved, preventing phase separation even when the slurry is stored or left unattended for a long period of time.

According to one embodiment of the present disclosure, the method for manufacturing a separator for an electrochemical device 100 includes mixing a slurry for a coating layer including a plate-shaped silicate-based composition, polymer binder particles and inorganic particles (S10). By including the mixing of a slurry for a coating layer including a plate-shaped silicate-based composition, polymer binder particles and inorganic particles (S10) as described above, a coating layer may be readily formed on the separator.

According to one embodiment of the present disclosure, the slurry for a coating layer may be provided by preparing a polymer emulsion through dispersing the polymer binder particles in water, a proper dispersion medium. By providing the slurry for a coating layer by preparing a polymer emulsion through dispersing the polymer binder particles in water, a proper dispersion medium, as described above, contaminants generated during the manufacturing process may be minimized. In the present specification, the dispersion medium is used during the process of preparing the slurry, and may mean a solvent or a dispersion medium.

According to one embodiment of the present disclosure, inorganic particles may be added and dispersed in the polymer emulsion. The content ratio between the inorganic particles and the polymer binder particles is as described above, and is properly controlled considering the thickness, pore size and porosity of the finally prepared coating layer according to one embodiment of the present disclosure.

According to one embodiment of the present disclosure, the plate-shaped silicate-based composition may be further added to the polymer emulsion in which the inorganic particles and the polymer binder particles are dispersed. By further adding the plate-shaped silicate-based composition to the polymer emulsion in which the inorganic particles and the polymer binder particles are dispersed as described above, dispersibility of the polymer binder particles and the inorganic particles is improved in the polymer emulsion, thereby preventing phase separation of the slurry for a coating layer and improving storage stability.

According to one embodiment of the present disclosure, the inorganic emulsion may further include a dispersant. Specifically, the dispersant may be a polyacrylic acid-based dispersant. By further including the polyacrylic acid-based dispersant in the inorganic emulsion as described above, dispersity of the inorganic particles dispersed in the inorganic emulsion is improved, low resistance of the separator is achieved since the dispersed inorganic particles are not included in a specific portion, and uniformity of the coating layer may be improved.

According to one embodiment of the present disclosure, the dispersant may be included in an amount of greater than 0% by weight and 5% by weight or less in the inorganic emulsion. Specifically, the dispersant may be included in an amount of 1% by weight or greater and 2% by weight or less in the inorganic emulsion. By adjusting the content of the dispersant in the above-described range, denaturation of the coating layer caused by the dispersant is prevented, and dispersity of the inorganic particles may be improved.

According to one embodiment of the present disclosure, the plate-shaped silicate-based composition, the polymer binder particles and the inorganic particles may be dispersed in water, a dispersion medium, to prepare the slurry for a coating layer. Specifically, the slurry for a coating layer may be prepared by adding an aqueous suspension including the plate-shaped silicate-based composition to the inorganic emulsion.

According to one embodiment of the present disclosure, the inorganic particles may be included in an amount of 10% by weight or greater and 50% by weight or less in the inorganic emulsion. Specifically, the inorganic particles may be included in an amount of 20% by weight or greater and 35% by weight or less in the inorganic emulsion. By adjusting the content of the inorganic particles in the above-described range, heat resistance of the separator may be improved, securing battery safety.

According to one embodiment of the present disclosure, the dispersion medium may be included in an amount of 30% by weight or greater and 70% by weight or less in the inorganic emulsion. Specifically, water, which is the dispersion medium, may be included in an amount of 40% by weight or greater and 60% by weight or less in the inorganic emulsion. By adjusting the content of the dispersion medium in the above-described range, viscosity of the slurry for a coating layer is controlled, and as a result, specific shape and thickness may be maintained when coating the coating layer.

According to one embodiment of the present disclosure, the inorganic emulsion may have a solid content of 10% by weight or greater and 50% by weight or less. Specifically, the inorganic emulsion may have a solid content of 15% by weight or greater and 40% by weight or less, 20% by weight or greater and 35% by weight or less, or 15% by weight or greater and 40% by weight or less. By adjusting the solid content of the inorganic emulsion in the above-described range, workability of the coating layer preparation process may be improved.

According to one embodiment of the present disclosure, the content of the polymer binder particles may be 10% by weight or greater and 30% by weight or less in the inorganic emulsion. Specifically, the content of the polymer binder particles may be 15% by weight or greater and 25% by weight or less in the inorganic emulsion. By adjusting the content of the polymer binder particles in the above-described range, assembly readiness may be improved in the process of assembling electrodes, and physical rigidity of the coating layer may be improved by improving binding strength between the inorganic particles.

According to one embodiment of the present disclosure, the content of the surfactant may be 0.1% by weight or greater and 2% by weight or less in the inorganic emulsion. Specifically, the content of the surfactant may be 0.1% by weight or greater and 1% by weight or less in the inorganic emulsion. By adjusting the content of the surfactant in the above-described range, each component in the coating layer slurry may be uniformly mixed.

According to one embodiment of the present disclosure, the plate-shaped silicate-based composition may be added as an aqueous suspension including the plate-shaped silicate-based composition in an amount of 2% by weight in the slurry for a coating layer. Furthermore, in the slurry for a coating layer, the aqueous suspension including the plate-shaped silicate-based composition in an amount of 2% by weight may be included in an amount of 10 parts by weight or greater and 20 parts by weight or less with respect to 100 parts by weight of the inorganic emulsion. Specifically, in the slurry for a coating layer, the aqueous suspension including the plate-shaped silicate-based composition in an amount of 2% by weight may be included in an amount of 13 parts by weight or greater and 17 parts by weight or less with respect to 100 parts by weight of the inorganic emulsion. By adjusting the content of the aqueous suspension including the plate-shaped silicate-based composition in an amount of 2% by weight in the above-described range in the slurry for a coating layer, a uniform surface of the separator may be achieved, improving a breakdown voltage.

According to one embodiment of the present disclosure, the method for manufacturing a separator for an electrochemical device 100 includes coating the slurry for a coating layer on at least one surface of a porous polymer substrate 110 (S30). By including the coating of the slurry for a coating layer on at least one surface of a porous polymer substrate 110 as described above, the coating layer 130 may be formed with one-time coating, and, by the separation between the inorganic particles and the polymer binder particles in the slurry for a coating layer, the polymer binder particles 133 are present in excess in the far portion facing the porous polymer substrate 110 compared to in the portion close to the porous polymer substrate 110, improving adhesive strength with an electrode, and porosity of the separator may be improved. In the present specification, the portion close to the porous polymer substrate 110 (one portion of coating layer) and the far portion (the other portion of coating layer) may be distinguished based on an imaginary surface occupying a 1/2 thickness of the thickness of the coating layer.

According to one embodiment of the present disclosure, the method for coating the slurry for a coating layer on the surface of the porous polymer substrate 110 is not particularly limited to any one method, and common methods known in the art may be used. For example, various methods such as dip coating, die coating, roll coating, comma coating or mixed methods thereof may be used.

According to one embodiment of the present disclosure, the method for manufacturing a separator for an electrochemical device 100 includes providing a coating layer 130 by drying the slurry for a coating layer (S50). By including the providing of a coating layer 130 by drying the slurry for a coating layer (S50) as described above, damages to the coating layer may be minimized, and the dispersion medium included in the slurry may be readily removed.

According to one embodiment of the present disclosure, the temperature of the drying process may be 25°C or higher and 75°C or lower. Specifically, the temperature of the drying process may be 30°C or higher and 70°C or lower, 35°C or higher and 65°C or lower, 40°C or higher and 60°C or lower, or 45°C or higher and 55°C or lower. By adjusting the temperature of the drying process in the above-described range, denaturation of the porous polymer substrate is prevented, and the dispersion medium may be effectively removed.

According to one embodiment of the present disclosure, the drying process properly sets the time condition so as to minimize the occurrence of surface defects in the coating layer 130. For the drying, a drying auxiliary device such as a drying oven or hot air may be used within an appropriate extent.

According to one embodiment of the present disclosure, the separator 100 is interposed between a positive electrode 300 and a negative electrode 500, and a lamination process of applying heat and/or pressure thereto for bonding is used to manufacture an electrochemical device 1000. In one embodiment of the present disclosure, the lamination process may be performed using a roll press device including a pair of pressure rollers. In other words, a negative electrode 500, the separator 100 and a positive electrode 300 are sequentially laminated, and inserted between the pressure rollers to achieve interlayer bonding. Herein, the lamination process may be performed using a method of hot pressing.

One embodiment of the present disclosure provides an electrochemical device 1000 including: a positive electrode 300; a negative electrode 500; and the separator 100 interposed between the positive electrode 300 and the negative electrode 500.

The electrochemical device 1000 according to one embodiment of the present disclosure may improve battery performance by improving uniformity of the coating layer 130.

FIG. 2 is a schematic diagram of the electrochemical device 1000 according to one embodiment of the present disclosure. The electrochemical device 1000 according to one embodiment of the present disclosure will be specifically described with reference to FIG. 2.

In one embodiment of the present disclosure, the electrochemical device is a device converting chemical energy into electrical energy by an electrochemical reaction, and is a concept encompassing a primary battery and a secondary battery. In the present specification, the secondary battery is capable of charging and discharging, and refers to, a lithium secondary battery, a nickel-cadmium battery, a nickel-hydrogen battery or the like. The lithium secondary battery uses lithium ions as an ion conductor, and examples thereof may include a non-aqueous electrolyte secondary battery including a liquid electrolyte, an all-solid-state battery including a solid electrolyte, a lithium polymer battery including a gel polymer electrolyte, a lithium metal battery using lithium metal as a negative electrode, and the like, but are not limited thereto.

According to one embodiment of the present disclosure, the positive electrode is provided with a positive electrode current collector, and a positive electrode active material layer including a positive electrode active material, a conductor and a binder resin on at least one side surface of the current collector. The positive electrode active material may include one type of a layered compound or a compound substituted with one or more transition metals such as lithium manganese composite oxide ($LiMn_2O_4$, $LiMnO_2$ and the like), lithium cobalt oxide ($LiCoO_2$) or lithium nickel oxide ($LiNiO_2$); lithium manganese oxide such as a chemical formula of $Li_{1+x}Mn_{2-x}O_4$ (herein, x is from 0 to 0.33), $LiMnO_3$, $LiMn_2O_3$ or $LiMnO_2$; lithium copper oxide ($Li_2CuO_2$); vanadium oxide such as $LiV_3O_8$, $LiV_3O_4$, $V_2O_5$ or $Cu_2V_2O_7$; Ni-site-type lithium nickel oxide represented by a chemical formula of $LiNi_{1-x}M_xO_2$ (herein, M=Co, Mn, Al, Cu, Fe, Mg, B or Ga, and x=0.01 to 0.3); lithium manganese composite oxide represented by a chemical formula of $LiMn_{1-x}M_xO_2$ (herein, M=Co, Ni, Fe, Cr, Zn or Ta, and x=0.01 to 0.1) or $Li_2Mn_3MO_8$ (herein, M=Fe, Co, Ni, Cu or Zn); $LiMn_2O_4$ in which some of Li in the chemical formula are substituted with alkaline earth metal ions; a disulfide compound; and $Fe_2(MoO_4)_3$, or a mixture of two or more types thereof.

According to one embodiment of the present disclosure, the negative electrode is provided with a negative electrode current collector, and a negative electrode active material layer including a negative electrode active material, a conductor and a binder resin on at least one side surface of the current collector. The negative electrode may include, as the a negative electrode active material, one type selected from among lithium metal oxide, carbon such as non-graphitizable carbon or graphite-based carbon; metal composite oxide such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, elements of groups 1, 2 and 3 of the periodic table, halogen; $0 < x \leq 1$; $1 \leq y \leq 3$; $1 \leq z \leq 8$); lithium metal; lithium alloy; silicon-based alloy; tin-based alloy; metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2PO_3$; conductive polymer such as polyacetylene; Li-Co-Ni-based material; and titanium oxide, or a mixture of two or more types thereof.

According to one embodiment of the present disclosure, the conductor may be, for example, any one selected from the group consisting of graphite, carbon black, carbon fiber or metal fiber, metal powder, conductive whisker, conductive metal oxide, activated carbon and polyphenylene derivative, or a mixture of two or more types of conductive materials thereof. More specifically, the conductor may be one type selected from the group consisting of natural graphite, artificial graphite, super-p, acetylene black, ketjen black, channel black, furnace black, lamp black, thermal black, denka black, aluminum powder, nickel powder, zinc oxide, potassium titanate and titanium oxide, or a mixture of two or more types of conductive materials thereof.

According to one embodiment of the present disclosure, the current collector is not particularly limited as long as it has high conductivity without causing chemical changes to the corresponding battery, and, for example, stainless steel, copper, aluminum, nickel, titanium, baked carbon, or aluminum or stainless steel of which surface is treated with carbon, nickel, titanium, silver or the like, and the like may be used.

According to one embodiment of the present disclosure, as the binder resin, polymers commonly used in an electrode in the art may be used. Nonlimiting examples of such a binder resin may include polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose and the like, but are not limited thereto.

According to one embodiment of the present disclosure, the positive electrode slurry for preparing the positive electrode active material layer may include a dispersant, and the dispersant may be a pyrrolidone-based compound. Specifically, the dispersant may be N-methylpyrrolidone (ADC-01, LG Chem).

According to one embodiment of the present disclosure, the content of the dispersant included in the positive electrode slurry may be greater than 0 part by weight and 0.5 parts by weight or less with respect to 100 parts by weight of the positive electrode slurry. Specifically, the content of the dispersant included in the positive electrode slurry may be greater than 0.05 parts by weight and 0.4 parts by weight or less with respect to 100 parts by weight of the positive electrode slurry.

According to one embodiment of the present disclosure, the negative electrode slurry for preparing the negative electrode active material layer may include a dispersant, and the dispersant may be a polypyrrolidone-based compound. Specifically, the dispersant may be polyvinylpyrrolidone (Junsei Chemical CO., Ltd. of Japan).

According to one embodiment of the present disclosure, the content of the dispersant included in the negative electrode slurry may be greater than 0 part by weight and 0.5 parts by weight or less with respect to 100 parts by weight of the negative electrode slurry. Specifically, the content of the dispersant included in the negative electrode slurry may be greater than 0.05 parts by weight and 0.4 parts by weight or less with respect to 100 parts by weight of the negative electrode slurry.

According to one embodiment of the present disclosure, the electrochemical device manufactured as above may be inserted into a proper case, and an electrolyte liquid may be injected thereinto to manufacture a battery.

According to one embodiment of the present disclosure, the electrolyte liquid is obtained by dissolving or dissociating a salt having a structure such as $A^+B^-$ in which $A^+$ includes an ion consisting of an alkali metal cation such as $Li^+$, $Na^+$ or $K^+$ or a combination thereof and $B^-$ includes an ion consisting of an anion such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$ or $C(CF_2SO_2)_3^-$ or a combination thereof, in an organic solvent consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma butyrolactone ($\gamma$-butyrolactone) or a mixture thereof, however, the electrolyte liquid is not limited thereto.

One embodiment of the present disclosure provides a battery module including a battery including the electrochemical device as a unit cell, a battery pack including the battery module, and a device including the battery pack as a power source. Specific examples of the device may include power tools powered by an electric motor; electric motor vehicles including electric vehicles (EV), hybrid electric vehicles (HEV), plug-in hybrid electric vehicles (PHEV) and the like; electric two-wheeled bicycles including electric bicycles (E-bike) and electric scooters (E-scooter); electric golf carts; systems for power storage and the like, but are not limited thereto.

**Mode for Carrying Out Invention**

Hereinafter, the present disclosure will be described in detail with reference to examples in order to specifically describe the present disclosure. However, examples according to the present disclosure may be modified to various different forms, and the scope of the present disclosure is not construed as being limited to the examples described below. Examples of the present specification are provided in order to more fully describe the present disclosure to those having average knowledge in the art.

**<Example 1>**

$Al_2O_3$ (particle diameter: 430 nm), which is an inorganic particle, and a dispersant (polyacrylic acid-based dispersant, Lubrizol Corporation, CK-7058) were introduced to water, and dispersed to prepare a mixture (solid concentration 20% by weight). After that, styrene-butyl acrylate (glass transition temperature 40°C, sphericity 0.95, density 1.5 g/cm$^3$), which is a polymer binder particle, having a particle diameter of 350 nm and a surfactant (BYK, BYK-346) were added to the mixture, and the mixture was stirred at a rate of 800 rpm to 1000 rpm for 10 minutes to prepare an inorganic emulsion. In the prepared inorganic emulsion, the content of the inorganic particles was employed to be 24% by weight, the content of the dispersant 1.4% by weight, the content of the polymer binder particles 17% by weight, the content of the surfactant 0.1% by weight and the content of the water 57.5% by weight.

Separately, laponite (density: 1000kg/m$^3$, specific surface area: 370 m$^2$/g, pH (in 2% by weight of aqueous suspension)=9.8) including 59.5% by weight of $SiO_2$, 27.5% by weight of MgO, 0.8% by weight of $Li_2O$ and 2.8% by weight of $Na_2O$, which is a plate-shaped silicate-based composition, was introduced to water, a dispersion medium, in small amounts at 1500 rpm until it became transparent to prepare 2% by weight of aqueous suspension.

The aqueous suspension was filtered through a filter having a size of 400 mesh, and then 15 parts by weight of the aqueous suspension was added to 100 parts by weight of the inorganic emulsion including the polymer binder particles and the surfactant, and the mixture was stirred at a rate of 800 rpm to 1000 rpm for 10 minutes to prepare a slurry for a coating layer.

**<Example 2>**

A slurry for a coating layer was prepared in the same manner as in Example 1, except that 2% by weight of aqueous suspension obtained by introducing laponite (density: 1000 kg/m$^3$, specific surface area: 330 m$^2$/g, pH (in 2% by weight of aqueous suspension)=9.4) including 55.0% by weight of $SiO_2$, 27.0% by weight of MgO, 1.4% by weight of $Li_2O$, 3.8% by weight of $Na_2O$ and 5.6% by weight of F, which is the plate-shaped silicate-based composition, to water, the dispersion medium, in small amounts at 1500 rpm until it became transparent was used.

**<Example 3>**

A slurry for a coating layer was prepared in the same manner as in Example 1, except that 2% by weight of aqueous suspension obtained by introducing laponite (density: 950 kg/m$^3$, specific surface area: 300 m$^2$/g, pH (in 2% by weight of aqueous suspension)=10.0) including 50.2% by weight of $SiO_2$, 22.2% by weight of MgO, 1.2% by weight of $Li_2O$, 7.5% by weight of $Na_2O$, 5.4% by weight of $P_2O_5$ and 4.8% by weight of F, which is the plate-shaped silicate-based composition, to water, the dispersion medium, in small quantities at 1500 rpm until it became transparent was used.

**<Example 4>**

A slurry for a coating layer was prepared in the same manner as in Example 1, except that laponite (density: 1000 kg/m$^3$, specific surface area: 370 m$^2$/g, pH (in 2% by weight of aqueous suspension)=9.8) including 59.5% by weight of $SiO_2$, 27.5% by weight of MgO, 0.8% by weight of $Li_2O$ and 1.8% by weight of $Na_2O$ was used as the plate-shaped silicate-based composition.

**<Example 5>**

A slurry for a coating layer was prepared in the same manner as in Example 1, except that laponite (density: 1000 kg/m$^3$, specific surface area: 370 m$^2$/g, pH (in 2% by weight of aqueous suspension)=9.8) including 59.5% by weight of $SiO_2$, 27.5% by weight of MgO, 0.8% by weight of $Li_2O$ and 8.5% by weight of $Na_2O$ was used as the plate-shaped silicate-based composition.

**<Example 6>**

A slurry for a coating layer was prepared in the same manner as in Example 1, except that laponite (density: 1000kg/m$^3$, specific surface area: 370 m$^2$/g, pH (in 2% by weight of aqueous suspension)=9.8) including 73.2% by weight of $SiO_2$, 13.7% by weight of MgO, 0.8% by weight of $Li_2O$ and 2.8% by weight of $Na_2O$ was used as the plate-shaped silicate-based composition.

**<Example 7>**

A slurry for a coating layer was prepared in the same manner as in Example 1, except that laponite (density: 1000 kg/m$^3$, specific surface area: 370 m$^2$/g, pH (in 2% by weight of aqueous suspension)=9.8) including 45.8% by weight of $SiO_2$, 41.2% by weight of MgO, 0.8% by weight of $Li_2O$ and 2.8% by weight of $Na_2O$ was used as the plate-shaped silicate-based composition.

**<Comparative Example 1>**

$Al_2O_3$ (particle diameter: 430 nm), which is an inorganic particle, and a dispersant (polyacrylic acid-based dispersant, Lubrizol Corporation, CK-7058) were introduced to water, and dispersed to prepare a mixture (solid concentration 20% by weight). After that, styrene-butyl acrylate (glass transition temperature 40°C, sphericity 0.95, density 1.5 g/cm$^3$), which is a polymer binder particle, having a particle diameter of 350 nm and a surfactant (BYK, BYK-346) were added to the mixture, and the mixture was stirred at a rate of 800 rpm to 1000 rpm for 10 minutes to prepare an inorganic emulsion. In the prepared inorganic emulsion, the content of the inorganic particles was employed to be 24% by weight, the content of the dispersant 1.4% by weight, the content of the polymer binder particles 17% by weight, the content of the surfactant 0.1% by weight and the content of the water 57.5% by weight.

**<Manufacture of Separator for Electrochemical Device>**

A polyethylene resin (weight average molecular weight 900,000) was extruded, and a porous polymer substrate (total thickness about 9 $\mu$m, porosity 40% by volume) was prepared using a wet method.

On both surfaces of the porous polymer substrate, the slurry for a coating layer of each of Examples 1 to 3 and Comparative Example 1 was coated by a bar coating method using a doctor blade, and dried with air at 50°C using a heat gun to form a coating layer having a thickness of 3 $\mu$m on each of the both surfaces, and as a result, a separator having a total thickness of 15 $\mu$m was manufactured.

**<Manufacture of Electrochemical Device>**

1) Preparation of Positive Electrode

A positive electrode active material ($LiNi_{0.8}Mn_{0.1}Co_{0.1}O_2$), a conductor (carbon black), a dispersant (N-methylpyrrolidone, ADC-01, LG Chem.) and a binder resin (mixture of PVDF-HFP and PVDF) were mixed with water in a weight ratio of 97.5:0.7:0.14:1.66 to prepare a slurry for a positive electrode active material layer in which the components other than water had a concentration of 50 wt%. Then, the slurry was coated on a surface of an aluminum thin film (thickness 10 μm), and dried to prepare a positive electrode having a positive electrode active material layer (thickness 120 μm).

2) Preparation of Negative Electrode

Graphite (blend of natural graphite and artificial graphite), conductor (carbon black), a dispersant (polyvinylpyrrolidone, Junsei Chemical CO., Ltd. of Japan) and a binder resin (mixture of PVDF-HFP and PVDF) were mixed with water in a weight ratio of 97.5:0.7:0.14:1.66 to prepare a slurry for a negative electrode active material layer in which the components other than water had a concentration of 50 wt%. Then, the slurry was coated on a surface of a copper thin film (thickness 10 μm), and dried to prepare a negative electrode having a negative electrode active material layer (thickness 120 μm).

3) Lamination Process

Each of the separators of Examples was interposed between the negative electrode and the positive electrode prepared above for lamination, and a lamination process was performed to obtain an electrochemical device. The lamination process was performed for 10 seconds using a hot press under a condition of 70°C and 5.2 MPa.

**<Experimental Example 1: Identification of Phase Separation Occurrence>**

The slurry for a coating layer of each of Examples 1 to 7 and Comparative Example 1 was placed in a 250 ml container in a room temperature environment (20°C to 25°C), and the container was placed on a horizontal bottom surface. An occurrence of phase separation (layer separation) was identified over time, and the results are summarized in the following Table 1.

**<Experimental Example 2: Measurement of Breakdown Voltage>**

For the separator formed with the coating layer of each of Examples 1 to 7 and Comparative Example 1 having a thickness of 12 μm, a pressure of 8 MPa was applied at 70°C, and, while raising the pressure at a rate of 100 mV/s, a voltage when exceeding 0.5 mA and 3 seconds was measured, and the results are summarized in the following Table 1.

**<Experimental Example 3: Measurement of Thermal Shrinkage>**

The separator manufactured with the slurry of each of Examples 1 to 7 and Comparative Example 1 was prepared into a specimen having a size of 5 cmx5 cm, and after storing the specimen for 30 minutes at 150°C, the machine direction (MD) and the transverse direction (TD) of each of the specimens were measured to calculate thermal shrinkage using the following Mathematical Equation 1, and the results are summarized in the following Table 1.

Thermal shrinkage (%)=(length before storage-length after storage)/length before storage     [Mathemathical Equation 1]

**<Experimental Example 4: Measurement of Air Permeability>**

For the separator manufactured with the slurry of each of Examples 1 to 7 and Comparative Example 1, air permeability (air permeating time, Gurley) was measured using the method of ASTM D-2873. The Gurley value was measured using a Gurley type densometer (No.158) manufactured by Toyo Seiki Seisaku-Sho, Ltd. in accordance with the Japanese Industrial Standard Gurley (JIS Gurley) measurement method. The air permeability value was expressed as the time (seconds) taken for 100 ml of air to pass through a cross section of 1 in$^2$ of the separator under a pressure of 12.2 in $H_2O$, that is, the air permeating time.

**<Experimental Example 5: Measurement of Peel Strength>**

The separator manufactured with the slurry of each of Examples 1 to 7 and Comparative Example 1 was prepared into a specimen having a size of 1.5 cmx7 cm, and after attaching the coating layer in the specimen to slide glass, the specimen was pulled with a force of 180° at a measurement rate of 300 mm/min using a UTM device (LLOYD Instrument LF Plus) for the measurement.

[Table 1]

| | Phase Separation | | | Breakdown Voltage (mV) | Thermal Shrinkage (%) | Air Permeability (Sec) | Peel Strength (15 mm/gf) |
|---|---|---|---|---|---|---|---|
| | After 1 day | After 3 days | After 7 days | | | | |
| Example 1 | None | None | None | 1.65 | 0 | 84 | 20 |
| Example 2 | None | None | None | 1.66 | 0 | 83 | 20 |
| Example 3 | None | None | None | 1.65 | 0 | 84 | 19 |
| Example 4 | None | None | None | 1.65 | 0 | 84 | 17 |
| Example 5 | None | None | None | 1.65 | 0 | 83 | 17 |
| Example 6 | None | None | None | 1.80 | 0 | 79 | 22 |
| Example 7 | None | None | None | 1.65 | 0 | 83 | 17 |
| Compara tive Example 1 | None | Occurr ed | Occurre d | 1.64 | 0 | 84 | 16 |

Referring to Table 1, it was identified that, in Examples 1 to 7 including the plate-shaped silicate-based composition, phase separation did not occur in the slurry even when the slurry was left unattended for a time after preparation. In contrast, it was identified that, in Comparative Example 1 that does not include the plate-shaped silicate-based composition, phase separation occurred in the slurry when the slurry was left unattended for 3 days.

Furthermore, it was identified that Examples 1 to 7 including the plate-shaped silicate-based composition achieved a similar level of breakdown voltage, air permeability and peel strength to Comparative Example 1 even when including the plate-shaped silicate-based composition.

In addition, Example 1 to 7 had increased peel strength by increasing internal cohesion in the coating layer by including the plate-shaped silicate-based composition in the slurry. In contrast, it was identified that Comparative Example 1 had decreased peel strength since the plate-shaped silicate-based composition was not included in the slurry.

By including the plate-shaped silicate-based composition in the coating layer, the separator for an electrochemical device according to one embodiment of the present disclosure is capable of improving storage safety by preventing phase separation in the slurry while maintaining properties of existing separators, and is capable of improving peel strength of the coating layer.

[Reference Numeral]

100:     Separator for Electrochemical Device
110:     Porous Polymer Substrate
130:     Coating Layer
300:     Positive Electrode
500:     Negative Electrode
1000:     Electrochemical Device

**Claims**

1.   A separator for an electrochemical device, the separator comprising:

    a porous polymer substrate; and
    a coating layer provided on at least one surface of the porous polymer substrate and including a plate-shaped silicate-based composition, polymer binder particles and inorganic particles,
    wherein the plate-shaped silicate-based composition includes one selected from the group consisting of $SiO_2$, MgO, $Li_2O$, $Na_2O$ and combinations thereof.

2.   The separator of claim 1, wherein the plate-shaped silicate-based composition includes the $SiO_2$ in an amount of 50% by weight or greater and 60% by weight or less.

3.   The separator of claim 1, wherein the plate-shaped silicate-based composition includes the MgO in an amount of 22% by weight or greater and 28% by weight or less.

4. The separator of claim 1, wherein the plate-shaped silicate-based composition includes the $Li_2O$ in an amount of 0.5% by weight or greater and 2.0% by weight or less.

5. The separator of claim 1, wherein the plate-shaped silicate-based composition includes the $Na_2O$ in an amount of 2.0% by weight or greater and 8.0% by weight or less.

6. The separator of claim 1, wherein, in the plate-shaped silicate-based composition,

the $SiO_2$ is included in an amount of 65% by weight or greater and 80% by weight or less;
the MgO is included in an amount of 10% by weight or greater and 20% by weight or less;
the $Li_2O$ is included in an amount of 0.5% by weight or greater and 2.0% by weight or less; and
the $Na_2O$ is included in an amount of 9% by weight or greater and 20% by weight or less.

7. The separator of claim 1, wherein, in the plate-shaped silicate-based composition,

the $SiO_2$ is included in an amount of 70% by weight or greater and 75% by weight or less;
the MgO is included in an amount of 13% by weight or greater and 18% by weight or less;
the $Li_2O$ is included in an amount of 1.0% by weight or greater and 1.5% by weight or less; and
the $Na_2O$ is included in an amount of 12.0% by weight or greater and 18.0% by weight or less.

8. The separator of claim 1, wherein, in the plate-shaped silicate-based composition,

the $SiO_2$ is included in an amount of 71% by weight or greater and 74% by weight or less;
the MgO is included in an amount of 13% by weight or greater and 16% by weight or less;
the $Li_2O$ is included in an amount of 1.1% by weight or greater and 1.4% by weight or less; and
the $Na_2O$ is included in an amount of 14.0% by weight or greater and 16.0% by weight or less.

9. The separator of claim 1, wherein a content of the plate-shaped silicate-based composition is 0.1 parts by weight or greater and 1.0 parts by weight or less with respect to 100 parts by weight of the coating layer.

10. The separator of claim 1, wherein the plate-shaped silicate-based composition has a specific surface area of 250 $m^2$/g or greater and 400 $m^2$/g or less.

11. The separator of claim 1, wherein the plate-shaped silicate-based composition has density of 900 $kg/m^3$ to 1050 $kg/m^3$.

12. The separator of claim 1, wherein an aqueous suspension including the plate-shaped silicate-based composition in an amount of 1% by weight or greater and 3% by weight or less has a pH of 8.0 or greater and 12.0 or less.

13. The separator of claim 1, wherein the plate-shaped silicate-based composition further includes $P_2O_5$, F and combinations thereof.

14. The separator of claim 1, wherein the plate-shaped silicate-based composition is laponite.

15. An electrochemical device comprising:

a positive electrode;
a negative electrode; and
the separator of any one of claims 1 to 14 interposed between the positive electrode and the negative electrode.

【FIG. 1】

(a)

100

130

110

(b)

100

130

110

130

【FIG. 2】

1000

300

100

500

## INTERNATIONAL SEARCH REPORT

| International application No. |
| --- |
| **PCT/KR2024/009386** |

**A. CLASSIFICATION OF SUBJECT MATTER**

**H01M 50/446**(2021.01)i; **H01M 50/449**(2021.01)i; **H01M 50/431**(2021.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 50/446(2021.01); B32B 5/18(2006.01); H01M 10/0525(2010.01); H01M 10/42(2006.01); H01M 2/16(2006.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기화학소자(electrochemical device), 분리막(separator), 판상형 규산염계(plate-shaped silicate mineral), 코팅층(coating layer)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2012-104291 A (SONY CORP.) 31 May 2012 (2012-05-31)<br>See paragraphs [0004] and [0027]-[0036] and claims 1, 7 and 11. | 1,9-12,14-15 |
| Y | | 2-8,13 |
| Y | 운모 흑운모 견운모 백운모 금운모 형광운모. 30 June 2007, non-official translation (Mica Biotite Muscovite Phlogopite Fluoresce Mica). [Retrieved on 04 October 2024]. Retrieved from <https://blog.naver.com/haeinstone/120039561249>.<br>See pages 1-2. | 2-8,13 |
| A | KR 10-2016-0081903 A (SONY CORPORATION) 08 July 2016 (2016-07-08)<br>See claims 1-11. | 1-15 |
| A | KR 10-2010-0051710 A (HITACHI MAXELL, LTD.) 17 May 2010 (2010-05-17)<br>See paragraphs [0027]-[0143]. | 1-15 |

✓ Further documents are listed in the continuation of Box C.    ✓ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **18 October 2024** | **18 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/009386**

### C. DOCUMENTS CONSIDERED TO BE RELEVANT

| Category* | Citation of document, with indication, where appropriate, of the relevant passages | Relevant to claim No. |
|---|---|---|
| A | JP 2013-127955 A (HITACHI CHEMICAL CO., LTD.) 27 June 2013 (2013-06-27) See paragraphs [0019]-[0121]. | 1-15 |

Form PCT/ISA/210 (second sheet) (July 2022)

## INTERNATIONAL SEARCH REPORT
### Information on patent family members

International application No.

**PCT/KR2024/009386**

| Patent document cited in search report | | | Publication date (day/month/year) | Patent family member(s) | | | Publication date (day/month/year) |
|---|---|---|---|---|---|---|---|
| JP | 2012-104291 | A | 31 May 2012 | CN | 102468465 | A | 23 May 2012 |
| | | | | CN | 102468465 | B | 12 April 2017 |
| | | | | JP | 5664138 | B2 | 04 February 2015 |
| | | | | US | 2012-0115009 | A1 | 10 May 2012 |
| KR | 10-2016-0081903 | A | 08 July 2016 | CN | 105684207 | A | 15 June 2016 |
| | | | | CN | 105684207 | B | 15 May 2020 |
| | | | | EP | 3067981 | A1 | 14 September 2016 |
| | | | | EP | 3067981 | B1 | 21 July 2021 |
| | | | | JP | 6372491 | B2 | 15 August 2018 |
| | | | | JP | WO2015-068325 | A1 | 09 March 2017 |
| | | | | KR | 10-2185159 | B1 | 01 December 2020 |
| | | | | US | 10665841 | B2 | 26 May 2020 |
| | | | | US | 11532853 | B2 | 20 December 2022 |
| | | | | US | 2016-0254511 | A1 | 01 September 2016 |
| | | | | US | 2020-0259147 | A1 | 13 August 2020 |
| | | | | WO | 2015-068325 | A1 | 14 May 2015 |
| KR | 10-2010-0051710 | A | 17 May 2010 | CN | 101796668 | A | 04 August 2010 |
| | | | | CN | 101796668 | B | 14 August 2013 |
| | | | | JP | 5144651 | B2 | 13 February 2013 |
| | | | | JP | WO2009-044741 | A1 | 10 February 2011 |
| | | | | US | 2011-0052987 | A1 | 03 March 2011 |
| | | | | US | 9166251 | B2 | 20 October 2015 |
| | | | | WO | 2009-044741 | A1 | 09 April 2009 |
| JP | 2013-127955 | A | 27 June 2013 | CN | 104011917 | A | 27 August 2014 |
| | | | | CN | 104011917 | B | 13 June 2017 |
| | | | | EP | 2782173 | A1 | 24 September 2014 |
| | | | | EP | 2782173 | B1 | 07 November 2018 |
| | | | | JP | 2013-127954 | A | 27 June 2013 |
| | | | | JP | 2013-127956 | A | 27 June 2013 |
| | | | | JP | 2013-127957 | A | 27 June 2013 |
| | | | | JP | 2013-127958 | A | 27 June 2013 |
| | | | | JP | 6044288 | B2 | 14 December 2016 |
| | | | | JP | 6044289 | B2 | 14 December 2016 |
| | | | | JP | 6044290 | B2 | 14 December 2016 |
| | | | | JP | 6094163 | B2 | 15 March 2017 |
| | | | | JP | 6127464 | B2 | 17 May 2017 |
| | | | | KR | 10-2014-0099876 | A | 13 August 2014 |
| | | | | TW | 201328975 | A | 16 July 2013 |
| | | | | TW | I561469 | B | 11 December 2016 |
| | | | | US | 2014-0329140 | A1 | 06 November 2014 |
| | | | | WO | 2013-073594 | A1 | 23 May 2013 |

Form PCT/ISA/210 (patent family annex) (July 2022)

**EP 4 715 995 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230088117